# EUROPÄISCHE PATENTANMELDUNG

(11) **EP 3 792 506 A1**
(43) Veröffentlichungstag der Anmeldung: **17.03.2021**
(21) Anmeldenummer: 20020402.2
(22) Anmeldetag: 08.09.2020
(51) Int. Cl.: F16B 5/02

(54) **VARIABEL VERSTELLBARER UND FIXIERBARER WINKELVERBINDER**

(30) Priorität: 16.09.2019 AT 602092019
(71) Anmelder: Lesjak, Franz Albert, 4802 Ebensee (AT)
(72) Erfinder: Lesjak, Franz Albert, 4802 Ebensee (AT)

(57) **Zusammenfassung**

Winkelverbinder umfassend einen ersten Hauptteil (1) und einen zweiten Hauptteil (2), wobei der Winkelverbinder zur Verbindung von zwei Platten (6, 7) zu einem dreidimensionalen Formteil aus Platten (6, 7) verwendet werden kann, wobei die Hauptteile (1,2) jeweils mittels zweiter Verbindungsmittel (5) mit den Platten (6, 7) verbindbar sind, wobei vorgesehen ist, dass die beiden Hauptteile (1, 2) jeweils über einen gebogenen Fixierschenkel (1a, 2a) verfügen,
dass die beiden Hauptteile (1, 2) über eine gemeinsame, durch die jeweiligen Drehpunkte (1a, 2a) verlaufende Drehachse (A) in einem, durch die Länge der Fixierschenkel (1a, 2a) definierten, Winkelbereich zueinander schwenkbar sind, sodass die beiden Fixierschenkel (1a, 2a) einander formschlüssig überlappen,
und dass in einer gewählten Winkelposition die Fixierschenkel (1a, 2a) mittels erster Verbindungsmittel (3) formschlüssig und dauerhaft miteinander verbindbar und fixierbar sind.

## Beschreibung

Die Erfindung betrifft einen Winkelverbinder umfassend einen ersten Hauptteil und einen zweiten Hauptteil, wobei der Winkelverbinder zur Verbindung von zwei Platten zu einem dreidimensionalen Formteil aus Platten verwendet werden kann, wobei die Hauptteile jeweils mittels Verbindungsmittel mit den Platten verbindbar sind.

Aus dem Stand der Technik sind Winkelverbinder bekannt, welche einen fix vorgegebenen Winkel (z.B. 90°) aufweisen, siehe etwa EP 2022902 A2 oder DE 202006013551 U1, oder wo der Winkel mittels zusätzlicher Lochbleche fixierbar ist, siehe etwa US 2006254192 A1.

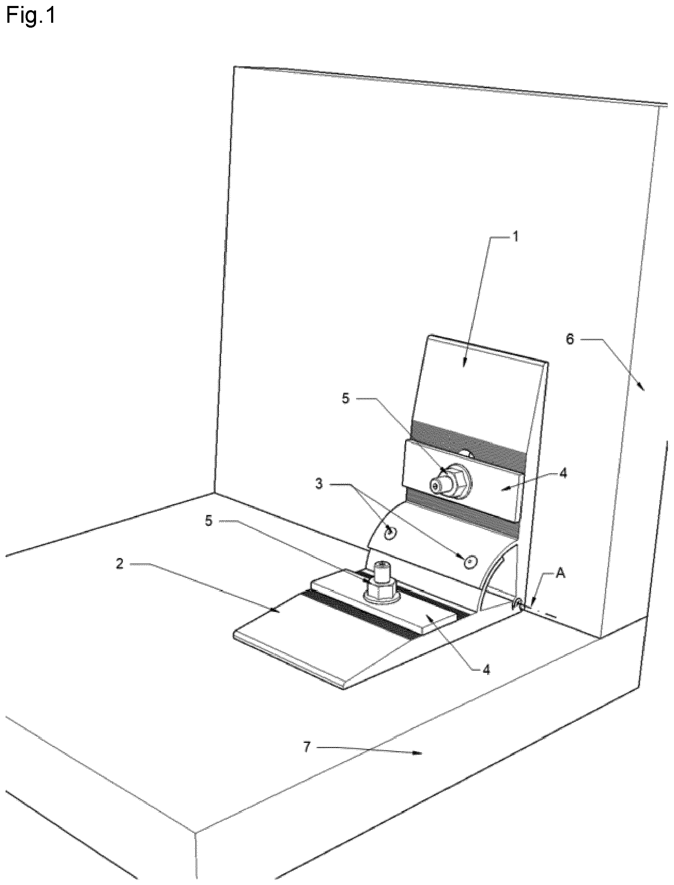

Die Erfindung zeigt jedoch einen Winkelverbinder (auch als Verbindungswinkel bezeichnet) (Fig.1), bei welchem der Winkel stufenlos eingestellt und in gewünschtem Winkel fixiert werden kann. So können durch die Erfindung Platten unter verschiedenem, aber dennoch fixierbarem Winkel formschlüssig miteinander verbunden werden. Die Hauptteile (unter diesem Begriff werden sowohl das erste als auch das zweite Hauptteil verstanden) der Erfindung bestehen aus metallischen (Aluminium, Stahl etc.) oder nichtmetallischem (Kunststoff) Werkstoff, welche entweder extrudiert, in diversen Gussverfahren, mittels Druckverfahren oder in spanender Bearbeitung hergestellt werden können.

Die beiden Schenkel (auch als Fixierschenkel bezeichnet) des Verbindungswinkels werden mittels standardisierter zweiter Verbindungsmittel (z.B. Hinterschnittanker, Schrauben, Nieten, Anker, Dübel, Einnietmuttern, Schweißbolzen etc.) mit den zu verbindenden Platten verbunden. Der Winkel zwischen den zu verbindenden Teilen kann dann in einem definierten Bereich frei gewählt werden. Fixiert wird dieser frei gewählte Winkel, indem die beiden Fixierschenkel formschlüssig miteinander verbunden werden. Dies erfolgt beispielsweise durch eine Bohrung und das Anbringen einer Nietverbindung oder etwa durch eine Selbstbohrschraube. Ebenfalls vorstellbar ist eine metrische Schraube mittels Gewinde im hinteren der beiden Fixierschenkel.

Anstatt dem Verbohren und Vernieten der Fixierschenkel der Hauptteile ist auch eine gegenläufig verlaufende Nut vorstellbar, welche mittels metrischer Schrauben samt Mutter verbunden und so fixiert werden kann. Die Fixierschenkel der Hauptteile können wahlweise mit Rillen versehen werden, was ein stufenweises Einstellen des gewünschten Winkels und eine bessere Fixierung ermöglicht, wenn die Rillen sich ineinander verzahnen.

Die Komponenten können je nach Anwendung angepasst werden, wobei die Grundidee der Erfindung erhalten bleibt. So können beispielsweise unterschiedliche Bohrungen für unterschiedliche zweite Verbindungsmittel der zu verbindenden Platten in die Schenkel gebohrt oder gefräst werden, beispielhaft ist ein Langloch, welches mittels Rillenscheibe in Langlochrichtung fixiert wird, dargestellt. Die Größe und Geometrie des variablen und fixierbaren Winkelverbinders kann dem jeweiligen Anwendungszweck angepasst werden. Die Lage der Fixierschenkel ist variabel und ebenfalls dem Anwendungszwecken anpassbar herzustellen.

Aus dem Stand der Technik ist bekannt, dass es diverse Winkelverbinder gibt, welche jedoch zumeist fixe Winkel (z.B. 90°) aufweisen und nicht verstellbar und fixierbar sind. Vergleichbar ist die Erfindung mit einem Scharnier, welches jedoch die Funktion sich verändernder Winkel erfüllt und üblicher Weise nicht in einer Position fixierbar ist.

Der Nachteil an bekannten Winkelverbindern ist, dass diese nicht frei verstellbar und in gewünschter Position fixierbar sind, was lediglich die Verbindung zweier Teile mit dem vorgegebenen Winkel ermöglicht. Diesem Nachteil wirkt die dargestellte Erfindung entgegen, da der Winkel der zu verbindenden Platten in einem eingeschränkten Bereich, z.B. 75° bis 105°, frei wählbar und dennoch im gewünschten Winkel fixierbar ist und einwirkende Kräfte aufnehmen kann.
- Fig. 1: und 5 zeigen einen erfindungsgemäßen Winkelverbinder in isometrischer Darstellung,
- Fig. 2: zeigt denselben Winkelverbinder in Explosionsdarstellung,
- Fig. 3: zeigt denselben Winkelverbinder in Seitenansicht,
- Fig. 4: zeigt denselben Winkelverbinder in Vorderansicht,
- Fig. 6: zeigt denselben Winkelverbinder in Draufsicht.

In den Figuren werden folgende Bezugszeichen verwendet:
1 zeigt eines der beiden Hauptteile 1,2 des variablen und fixierbaren Winkelverbinders.
   1a zeigt den maulförmigen, zylindrischen Drehpunkt des Hauptteils 1.
   1b zeigt den Fixierschenkel des Hauptteils 1.
   1c zeigt ein Langloch gefräst in den Hauptteil 1.
   1d zeigt eine relativ zum Langloch 1c um 90° gedrehte Rillung.
2 zeigt das zweite der beiden Hauptteile 1,2 des variablen und fixierbaren Winkelverbinders.
   2a zeigt den bolzenförmigen, zylindrischen Drehpunkt des Hauptteils 2.
   2b zeigt den Fixierschenkel des Hauptteils 2.
   2c zeigt ein Langloch gefräst in den Hauptteil 2.
   2d zeigt eine relativ zum Langloch 2c um 90° gedrehte Rillung.
3 zeigt ein erstes Verbindungsmittel (Niete).
4 zeigt ein Rillenblättchen (auch als Rillenscheibe bezeichnet) mit einer Bohrung.
5 zeigt ein mögliches zweites Verbindungsmittel, mit dem der Winkelverbinder mit einem Hauptteil verbunden werden kann. Hier gezeigt werden die Teile 5a, 5b und 5c.
   5a zeigt eine Sperrzahnmutter nach DIN 6923, welche Teil des zweiten Verbindungsmittels 5 ist.
   5b zeigt einen Gewindestift mit Innensechskant nach DIN 913, welcher Teil des zweiten Verbindungsmittels 5 ist.
   5c zeigt einen Hinterschnittanker der Firma Keil Befestigungstechnik, welcher Teil des Verbindungsmittels 5 ist.
6 zeigt eine der beiden zu verbindenden Platten (Faserbeton, HPL, Faserzement, Holz, schichtverleimtes Holz, Blech oder gleichartige Materialien).
   6a zeigt eine Spezialbohrung zur Verbindung mit dem Hinterschnittanker 5c.
7 zeigt die zweite der zu verbindenden Platten (Faserbeton, HPL, Faserzement, Holz, schichtverleimtes Holz, Blech oder gleichartige Materialien).
   7a zeigt eine Spezialbohrung zur Verbindung mit dem Hinterschnittanker 5c.
A stellt die gemeinsame Drehachse der beiden Haupteile (1, 2) dar.

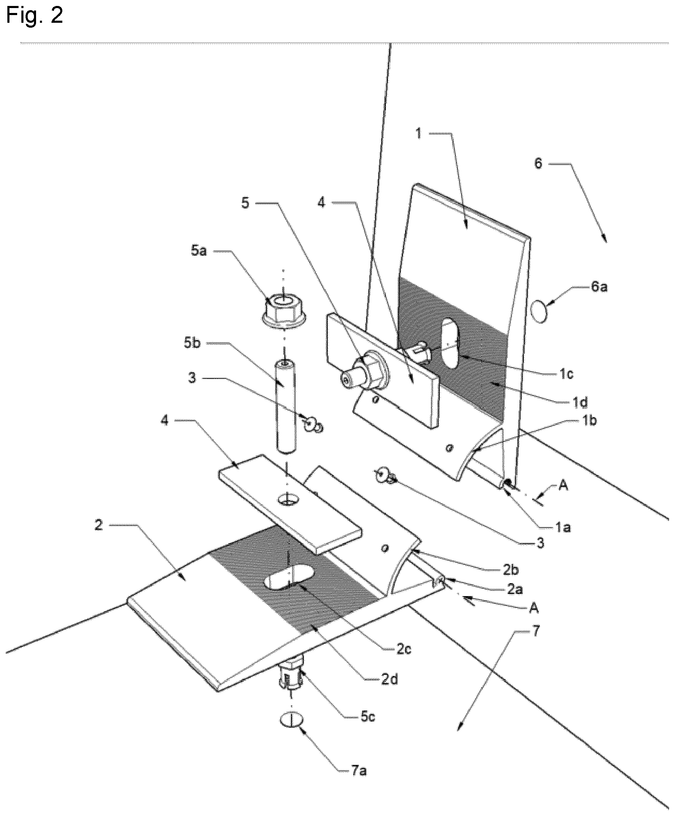

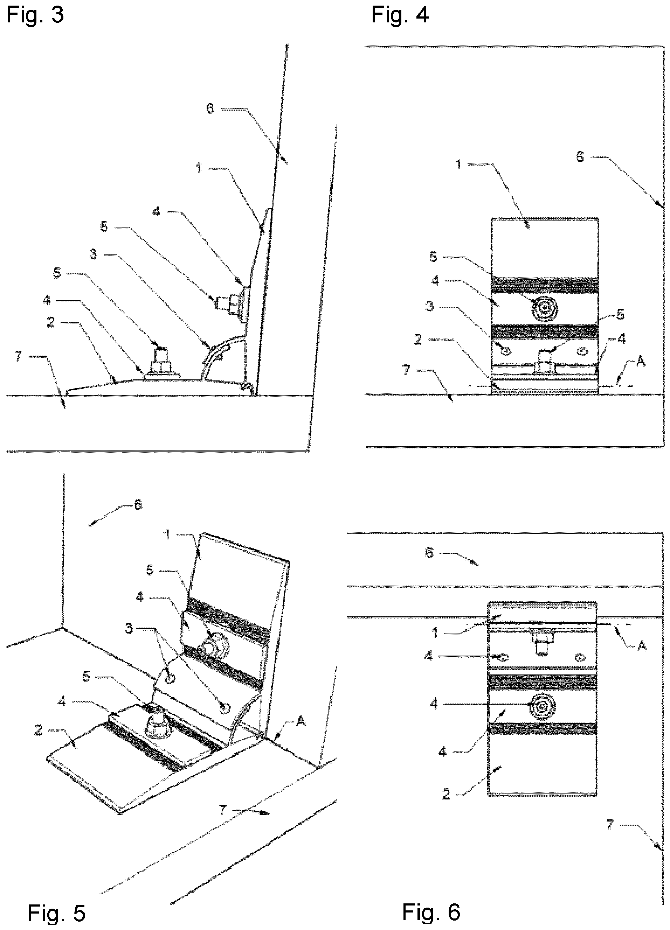

Wie aus Fig. 1 bis Fig.6 ersichtlich wird, verfügt das Hauptteil 1 über eine flache Auflagefläche, einen zentralen Drehpunkt 1a und einen gebogenen Fixierschenkel 1b, welcher denselben Drehpunkt hat wie der zentrale Drehpunkt 1a. Das Hauptteil 1 ist in der Darstellung mit einem Langloch 1c und um 90° gegenläufigen Rillen 1d dargestellt. Tatsächlich ergeben sich abhängig vom tatsächlichen Einsatzzweck diverse Möglichkeiten um die Verbindung zu Platte 6 bzw. Platte 7 zu bewerkstelligen.

Hauptteil 2 beschreibt das Gegenstück zu Hauptteil 1 und interagiert mit diesem, um die Verstellbarkeit zu gewährleisten. Auch dieses Hauptteil 2 verfügt über eine flache Auflagefläche, einen zentralen Drehpunkt 2a als Gegenstück zum zentralen Drehpunkt 1a von Hauptteil 1 und einen gebogenen Fixierschenkel 2b, welcher denselben Drehpunkt hat wie der zentrale Drehpunkt 2a, jedoch zum Fixierschenkel 1b von Hauptteil 1 versetzt ist. Das Hauptteil 2 ist in der Darstellung mit einem Langloch 2c und um 90° gegenläufigen Rillen 2d dargestellt. Tatsächlich ergeben sich abhängig vom tatsächlichen Einsatzzweck diverse Möglichkeiten um die Verbindung zu Platte 6 bzw. Platte 7 zu bewerkstelligen.

## Patentansprüche

1. Winkelverbinder umfassend einen ersten Hauptteil (1) und einen zweiten Hauptteil (2), wobei der Winkelverbinder zur Verbindung von zwei Platten (6, 7) zu einem dreidimensionalen Formteil aus Platten (6, 7) verwendet werden kann, wobei die Hauptteile (1,2) jeweils mittels zweiter Verbindungsmittel (5) mit den Platten (6, 7) verbindbar sind, **dadurch gekennzeichnet,**
**dass** die beiden Hauptteile (1, 2) jeweils über einen gebogenen Fixierschenkel (1a, 2a) verfügen,
**dass** die beiden Hauptteile (1, 2) über eine gemeinsame, durch die jeweiligen Drehpunkte (1a, 2a) verlaufende Drehachse (A) in einem, durch die Länge der Fixierschenkel (1a, 2a) definierten, Winkelbereich zueinander schwenkbar sind, sodass die beiden Fixierschenkel (1a, 2a) einander formschlüssig überlappen,
und **dass** in einer gewählten Winkelposition die Fixierschenkel (1a, 2a) mittels erster Verbindungsmittel (3) formschlüssig und dauerhaft miteinander verbindbar und fixierbar sind.

2. Winkelverbinder, nach Anspruch 1, **dadurch gekennzeichnet, dass** die Fixierschenkel (1b, 2b) mittels Nieten oder Schrauben, insbesondere Selbstbohrschrauben, aneinander in einer gewünschten Winkelstellung fixierbar sind.

3. Winkelverbinder nach einem der Ansprüche 1 oder 2, **dadurch gekennzeichnet, dass** die einem Hauptteil (1, 2) zugeordnete Platte (6, 7) mittels zweiter Verbindungsmittel (5) und entsprechender Bohrungen (6a, 7a) in den Platten (6, 7) mit dem Hauptteil (1, 2) verbunden wird, wobei der Hauptteil (1, 2) Öffnungen, etwa in Form von Langlöchern (1c, 2c), für die zweiten Verbindungsmittel (5) aufweist.

4. Winkelverbinder nach einem der Ansprüche 1 bis 3, **dadurch gekennzeichnet, dass** der Winkelverbinder derart ausgebildet ist, dass die Hauptteile (1, 2) um eine Drehachse (A) zueinander bewegbar sind, indem die Drehpunkte (1a, 2a) der Hauptteile (1, 2) einerseits als zylindrische Maulöffnung (1a) bei Hauptteil (1) bzw. als zylindrischer Bolzen (2a) bei Hauptteil (2) ausgebildet sind und in Längsrichtung entlang der Drehachse (A) ineinander geschoben werden können.

5. Winkelverbinder nach einem der Ansprüche 1 bis 4, **dadurch gekennzeichnet, dass** die beiden Hauptteile (1, 2) in einem Winkel zwischen 75° und 105° zueinander schwenkbar sind.

6. Winkelverbinder nach einem der Ansprüche 1 bis 5, **dadurch gekennzeichnet, dass** die beiden Hauptteile (1, 2) im montierten Zustand über die zu verbindenden Platten (6, 7) einwirkende Kräften in x, y und z-Richtung, sowie über die Drehachse (A) verlaufende Momente stabilisieren und aufnehmen können.

7. Winkelverbinder nach einem der Ansprüche 1 bis 6, **dadurch gekennzeichnet, dass** die Öffnung, inbesondere das Langloch (1c, 2c), für das zweite Verbindungsmittel (5) an das zweite Verbindungsmittel (5) in Durchmesser und Geometrie angepasst ist.

8. Winkelverbinder nach einem der Ansprüche 1 bis 7, **dadurch gekennzeichnet, dass** die Hauptteile (1, 2) jeweils ein Langloch (1c, 2c) zur Befestigung an einer Platte (6, 7) aufweisen und am Hauptteil (1, 2) eine quer zum Langloch (1c, 2c) verlaufende Rillung vorgesehen ist, um zweite Verbindungsmittel (5) über eine Rillenscheibe (4) am Hauptteil (1, 2) befestigen zu können.

9. Winkelverbinder nach einem der Ansprüche 1 bis 8, **dadurch gekennzeichnet, dass** die Fixierschenkel (1b, 2b) mit Rillen versehen sind, um ein stufenweises Einstellen des gewünschten Winkels und eine bessere Fixierung zu ermöglichen, indem die Rillen der Fixierschenkel (1b, 2b) sich ineinander verzahnen.
